# EUROPEAN PATENT APPLICATION

(11) **EP 0 630 678 A1**
(43) Date of publication of application: **28.12.1994**
(21) Application number: 94201770.8
(22) Date of filing: 21.06.1994
(51) Int. Cl.: B01D 47/18, F24C 15/20

(54) **A device for the purification of air applicable in particular to cooker hoods**

(30) Priority: 24.06.1993 IT PN930045
(71) Applicant: Del Ben, Sante, I-33170 Pordenone (IT); Leiber, Anita, I-33170 Pordenone (IT)
(72) Inventor: Del Ben, Sante, I-33170 Pordenone (IT); Leiber, Anita, I-33170 Pordenone (IT)
(74) Representative: Da Riva, Ermanno

(57) **Abstract**

A device for the purification of air, applicable in particular to cooker hoods, comprises a cylindrical casing (11) enclosed at the ends by two covers (12, 13) provided uppermost with relative couplings (122, 131) for connection respectively to a hood and to a venting pipeline equipped with a suitable extractor, also a plurality of perforated metal discs (16) installed internally of and coaxial with the casing, spaced apart one from another and keyed centrally to a shaft (15) mounted in appropriate supporting elements (14) and coupled to a geared electric motor (2). The lower parts of the discs (16) are partially immersed in a suitable liquid directed into the casing by way of a feeder device (3) which is connected to a tank (4) containing a supply of the liquid, and associated with a level control mechanism (31).

## Description

The present invention relates to a device applicable in particular to cooker hoods, or for other uses, which permits of obtaining a practically total purification of air directed through it.

More particularly such a device enables a filtration of air polluted with various substances, which essentially is brought about by passing the air through a plurality of perforated discs partially immersed in a bath of suitable liquid and set in rotation, so as to occasion the condensation of volatile parts and induce a washing action by which odorous substances are also eliminated. There are conventional hoods of various types and for various applications of which the function is basically to gather in air polluted by a variety of substances given off during sundry operations such as the cooking of foods, or industrial processes, and convey it to an outlet in most cases externally of the environment in which the operations are conducted.

In certain cases, again conventionally, the air drawn into the hood is returned to the same environment.

Clearly enough, it is desirable and in some instances necessary that the air drawn into the hood should be suitably filtered to prevent environmental pollution.

Such a filtration is very often obtained by channelling the contaminated air into filters consisting simply in porous substances fashioned as panels or the like, by which pollutant particles are trapped when the air is passed through. These filtration systems are normally of scant efficiency since they are able to trap only such particles of the pollutant substances as are of a certain size and/or perhaps capable of condensing when passed through the porous filtration medium; moreover, the porous medium gradually becomes saturated with the continuing accumulation of particulate matter, to the point of losing its capacity for filtration altogether, and must therefore be replaced periodically.

To obtain a more effective filtration, conventionally in certain instances, the contaminated air is directed through panels containing activated carbon granules which are indeed able ultimately to absorb and trap volatile substances composed of minute particles, such as vapours and even gases, but which will also release such particulates easily thereafter if invested by dry air; furthermore, the effectiveness of the absorption process is inversely proportionate to any increases in temperature and velocity of the contaminated air being filtered, and finally, it is obvious in this instance also that the activated carbon panels must gradually become saturated to the point of losing their absorbent properties, and will thus always need to be replaced periodically.

The object of the present invention is to overcome the aforementioned drawbacks: such an object is realized in the device disclosed, of which a preferred and possible embodiment will now be described by way of example and implying no limitation with the aid of the accompanying drawings, wherein:
- fig 1 shows the device disclosed in a longitudinal section;
- fig 2 shows the device of fig 1 in a side elevation;
- fig 3 is a section taken through I-I in fig 1;
- fig 4 is a section taken through II-II or III-III in fig 1.

Identical parts are indicated by a common number in the above drawings.

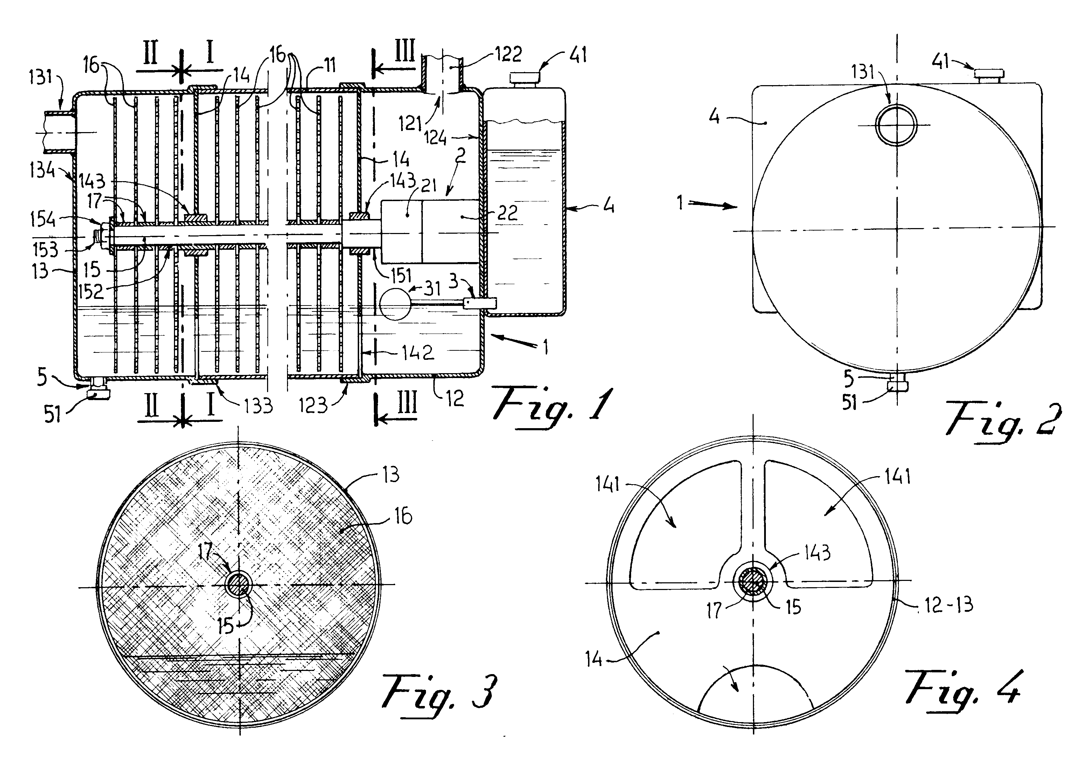

With reference in particular to fig 1, the device 1 will be seen to comprise a cylindrical casing 11 of appropriate length and diameter which is capped at the air inlet end by a first cover 12 substantially of bowl embodiment, affording a radial port 121 fitted possibly with a suitable coupling 122 and occupying a position at the top of the device 1, and capped at the opposite end by a second cover 13 likewise substantially of bowl embodiment and associated with a coupling 131, located at the top of the device 1, which will be connected to a relative air duct equipped with a suitable extractor device, typically a fan unit or similar conventional means which in the interests of clarity and simplicity of illustration and description are not indicated.

The extractor device, as intimated, will be installed on the duct connected to the outlet end of the device 1 disclosed and therefore aspirates only the air already treated inside the casing, which emerges purified of pollutant substances so that any risk of fouling the extractor is avoided.

As readily discernible in fig 1, the first and second covers 12 and 13 are embodied with respective enlarged rims 123 and 133 which fasten over the corresponding ends of the cylindrical casing 11 in such a manner as to retain the circumferential edges of corresponding discoid supporting elements 14 forcibly against these same ends; the two discoid elements 14 are identical, exhibiting a shape clearly illustrated in fig 4.

Naturally, the ends of the cylindrical casing 11 and the associated parts of the covers 12 and 13 will be interfaced by way of suitable sealing elements, which are conventional and therefore not illustrated, and the covers 12 and 13 secured to the relative ends of the cylindrical casing 11 utilizing any of various means and expedients likewise conventional in embodiment and therefore not illustrated.

As indicated in fig 4, each of the discoid supporting elements 14 is embodied with at least one or preferably two openings 141 extending over approximately half its surface area at least, which will be disposed in the upper part of the device 1 when assembled, whilst the opposite lower part of the element affords a further opening denoted 142.

The centres of the discoid supporting elements 14 are fitted with respective tubular cylindrical sleeves 143 rotatably supporting a shaft 15 which in turn supports a plurality of perforated or expanded metal discs 16, secured in a manner to be described in due course and of external diameter marginally less than the internal diameter of the casing they occupy.

The end of the shaft 15 positioned nearer to the first cover 12 is coupled to the output shaft of a geared motor 2, comprising a mechanical speed reducer 21 and a relative electric motor 22, which is suitably secured in conventional manner and by conventional means to the end wall 124 of the first cover 12.

Still observing fig 1, the shaft 15 comprises a first portion 151, and more precisely a portion coinciding with the end connected to the geared motor 2, of which the diameter is appropriately matched to the internal diameter of the cylindrical sleeve 143 afforded by the corresponding discoid supporting element 14, and which passes through the sleeve and extends as far as a first perforated metal disc 16, also a second portion 152 of suitably smaller diameter that extends further to a point near the end wall 134 of the second cover 13 and terminates in a short, threaded third portion 153.

The second portion 152 of the shaft 15 passes through and supports a plurality of perforated metal discs 16 alternated with suitable spacer elements 17 consisting essentially in respective cylindrical sleeves, which when assembled are secured in place by a lock nut 154 screwed onto the threaded portion 153.

Also mounted to the end wall 124 of the first cover 12 is a feeder device 3 occupying a position approximately at mid height in the lower half, by which the interior of the device 1 is connected with an external tank 4 designed to contain a selected liquid.

Such a feeder device 3 might consist, as illustrated in fig 1, of a valve operated by a suitable float 31, and the tank 4 will be provided with a filler 41 located at the top.

Finally, the bottom of the cylindrical casing 11 will afford a drain outlet 5 capped by a relative plug 51, of which the function will become clear in due course. The operation of the device 1 thus described is as follows.

The tank 4 is filled with the selected liquid, which obviously will be supplied by way of the feeder 3 to the internal chamber of the device 1, the quantity being determined by the level of the float 31. This done, the bottom part of the perforated metal discs 16 will be immersed in the resulting bath of liquid.

The geared motor 2 and the extractor device are now activated. Thereupon, the suction generated through the outlet coupling 131 by the extractor produces a partial vacuum internally of the device 1, and with a draught thus generated through the port 121, and through the relative coupling 122 if connected to a hood, air laden with pollutant substances will be drawn in from the hood.

The polluted air thus enters the chamber afforded by the first cover 12 and flows through the openings 141 of the first discoid supporting element 14 into the chamber afforded by the cylindrical casing 11, passing through the holes of the perforated metal discs 16 housed therein, then through the openings 141 of the second discoid supporting element 14 and ultimately through the holes of the perforated metal discs 16 occupying the chamber afforded by the second cover 13; from the far end of this chamber, the air flows out through the coupling 131 connected with the vent duct. Set in rotation, the perforated metal discs 16 are made to dip continuously in the bath of liquid afforded by the bottom part of the chamber created internally of the device 1, in such a way that the part of the disc remaining above the level of the bath is completely wetted with the liquid, which also clings to and fills the holes, moreover, forming a web across each one.

The result is that with the polluted air investing the surfaces of the perforated metal discs 16, which are coated with liquid, and passing through the thin webs of this same liquid formed across the relative holes, both the more consistent particles and the condensable substances are gradually deposited; and being subject to a genuine washing action, moreover, the air is also made to release any gaseous substances as these can in practice be absorbed by the liquid, which, accordingly, might consist in an aqueous solution of particular substances designed to promote such an absorption.

Thus, the air emerging from the final perforated metal disc 16 in sequence will for practical purposes be totally purified and even devoid of unpleasant odours, hence fit to be returned to the room from which it was extracted, or vented to the external atmosphere without causing any environmental pollution.

With the perforated metal discs 16 set in rotation, the contaminants deposited on the relative surfaces will be detached gradually by dipping in the bath and released ultimately into the liquid at a correspondingly gradual rate.

In consequence, there will be a steady accumulation of the substances thus removed and absorbed into the bath of liquid, dictating that the bath itself will need to be emptied at appropriate intervals: this is effected by removing the plug 51 from the drain outlet 5.

Finally, it will be noted that the extractor device employed might advantageously consist in a unit able to generate strong negative pressure, which would not only afford notable operational advantages but also allow a marked simplification of the device thus described.

In effect, experiments have been conducted using a particular extractor comprising a plurality of rotors arranged in series and turning at high speed, which is notably quiet in operation yet capable of generating a strong negative pressure.

It was thus found that the cross sectional dimensions of the passage offered to the air could be considerably reduced, and likewise, advantageously, the dimensions of the relative ducts.

This also provides a further advantageous possibility for simplifying the operation of the device: in effect, by shaping the perforated metal discs 16 or at least part of the discs with radial creases so as to generate corresponding radial portions of which the surfaces are angled in relation to the airflow, these can be made to function effectively as a screw, so that the air drawn through the discs will automatically and opportunely generated a rotational movement, and there is no need to install the geared motor 2.

The same effect has also been obtained by positioning elements with radial vanes between the perforated metal discs 16, the vanes again being angled in relation to the airflow.

The optimum speed of rotation for correct operation of the device can be controlled both by proportioning the angled surfaces correspondingly, and by varying the angle as appropriate.

Use could also be made of a suitable device designed to limit and set the speed of rotation of the perforated metal discs 16, which might be of a mechanical and/or electric and/or magnetic type.

It will be appreciated that variations in embodiment might be applied to the device to which the present invention relates, without by any means abandoning the scope of the foregoing specification and the references to the accompanying drawings, neither straying from within the bounds of protection afforded by the claims appended.

## Claims

**1)** A device for the purification of air applicable in particular to cooker hoods,
characterized
in that it comprises an external housing composed essentially of a cylindrical casing (11) capped at the ends by two covers (11, 12) furnished on the parts located uppermost with relative couplings (122, 131) for connection respectively to a hood, in such a way that contaminated air entering the hood can be drawn into the casing, and to a vent duct equipped with an extractor device such as a fan unit or the like, also, a plurality of perforated metal discs (16) disposed internally of and coaxial with the cylindrical casing (11), suitably distanced one from the next and secured centrally to a relative shaft (15) mounted coaxially in the casing (11) with suitable supporting elements (14) and coupled at one end to a geared electric motor (2) by means of which both the shaft (15) and the relative perforated metal discs (16) are driven in rotation;
in that the lower half of the housing is part-filled with a liquid providing a bath in which the bottom parts of the perforated metal discs (16) are immersed; and in that it further comprises a feeder device (3) associated with the housing, by which the housing is connected with a tank (4) containing a supply of the liquid, means (31) by which to control the level of the bath and allow its replenishment from the tank (4) when the level drops, and a drain outlet (5) located in the bottom part of the housing and sealable with a relative plug (51), such as will allow a periodic disposal of the liquid which during the course of operation becomes gradually laden with pollutant substances removed from the air passing through the device.

**2)** A device as in claim 1, wherein the perforated metal discs (16) or at least part thereof are embodied with radial creases generating corresponding radial portions of which the surfaces are angled in relation to the direction of the airflow internally of the device, in such a manner that the perforated metal discs (16) are invested with rotational movement by the flow of air.

**3)** A device as in claim 1, further comprising elements interposed between the perforated metal discs (16) and embodied with radial vanes angled in relation to the direction of the airflow internally of the device in such a way that the perforated metal discs (16) are invested with rotational movement by the flow of air.

**4)** A device as in preceding claims, wherein the angular velocity of a rotational movement of the perforated metal discs (16) generated by the airflow internally of the device is governed by suitable speed control means of conventional embodiment.

**5)** A device as in claim 1, wherein the perforated metal discs (16) can be fashioned from an expanded metal or mesh of which the mesh apertures are equivalent in size to the holes pierced in a corresponding perforated disc fashioned from sheet metal.
